# EUROPÄISCHE PATENTSCHRIFT

(11) **EP 0 562 471 B1**
(45) Veröffentlichungstag und Bekanntmachung des Hinweises auf die Patenterteilung: **06.09.1995**
(21) Anmeldenummer: 93104509.0
(22) Anmeldetag: 19.03.1993
(51) Int. Cl.: H02M 7/523, H05B 6/06

(54) **Verfahren zur Ansteuerung der Stromrichterventile von zwei oder mehr aus einer gemeinsamen Gleichstromquelle gespeisten Parallelschwingkreiswechselrichtern mit jeweils einem Induktionsofen und Anlage zur Durchführung des Verfahrens**
Method for triggering the converter valves of two or more parallel resonant circuit converters powered by a common DC source with one induction oven at a time and arrangement for the execution of the method
Procédé pour l'excitation des valves de deux ou plus convertisseurs avec des circuits oscillants parallèles alimentés d'un courant continu d'une source commune chaque convertisseur muni avec un four à induction chaque fois et un arrangement pour l'exécution du procédé

(30) Priorität: 25.03.1992 DE 4209645
(43) Veröffentlichungstag der Anmeldung: 29.09.1993
(73) Patentinhaber: ABB PATENT GmbH, 68309 Mannheim (DE)
(72) Erfinder: Fabianowski, Jan, Dr.-Ing., W-4600 Dortmund 13 (DE); Ibach, Robert, W-5840 Schwerte (DE)
(74) Vertreter: Rupprecht, Klaus, Dipl.-Ing.

(56) Entgegenhaltungen:
- DE-A- 2 834 561
- US-A- 4 131 937
- US-A- 4 275 438
- US-A- 4 390 769

## Beschreibung

Die Erfindung bezieht sich auf ein Verfahren zur Ansteuerung der Stromrichterventile von zwei oder mehr aus einer gemeinsamen Gleichstromquelle gespeisten Parallelschwingkreiswechselrichtern mit jeweils einem Induktionsofen gemäß dem Oberbegriff des Anspruchs 1 sowie auf eine Anlage zur Durchführung des Verfahrens.

Ein Parallelschwingkreisumrichter für die induktive Erwärmung ist aus der Siemens-Zeitschrift 45 (1971), Heft 9, Seite 601 bis 606 bekannt. Dabei handelt es sich um eine Zwischenkreisumrichterschaltung mit eingeprägtem Strom im Zwischenkreis. Der vom netzseitigen Gleichrichter aus einer Netzwechselspannung erzeugte Gleichstrom wird im lastseitigen Wechselrichter in einen mittelfrequenten Wechselstrom umgewandelt. Die Last besteht aus einem Induktor, der die Wirkleistung induktiv auf das zu erwärmende Gut (z.B. Metallschmelze) überträgt. Zur Deckung des hohen Blindleistungsbedarfs ist der Induktor mit Hilfe von einem oder mehreren Kompensationskondensatoren zu einem Parallelschwingkreis ergänzt. Im lastgeführten Wechselrichter wird der eingeprägte Zwischenkreisstrom wechselweise im Takt der Betriebsfrequenz über sich diagonal gegenüberliegende Ventilzweige auf die Last geschaltet und erzeugt in ihr näherungsweise eine sinusförmige Spannung. Die sich einstellende Betriebsfrequenz hängt wegen der Lasttaktung direkt mit der Eigenfrequenz des Lastkreises zusammen.

Bei einer Anlage aus mehreren Induktionsöfen mit jeweils eigenen Parallelschwingkreiswechselrichtern ist es üblich, jeden Parallelschwingkreiswechselrichter an eine eigene Gleichstromquelle, d.h. einen eigenen Gleichrichter mit Gleichstromzwischenkreis anzuschließen, was sehr kostenintensiv ist.

Der Erfindung liegt die Aufgabe zugrunde, ein Verfahren zur Ansteuerung der Stromrichterventile von zwei oder mehr aus einer gemeinsamen Gleichstromquelle gespeisten Parallelschwingkreiswechselrichtern von zwei oder mehr Induktionsöfen der eingangs genannten Art anzugeben, das eine stufenlose Aufteilung der von der Gleichstromquelle gelieferten Leistung an die einzelnen Induktionsöfen ermöglicht. Desweiteren soll eine Anlage zur Durchführung des Verfahrens angegeben werden.

Diese Aufgabe wird bezüglich des Verfahrens in Verbindung mit den Merkmalen des Oberbegriffes erfindungsgemäß durch die im Kennzeichen des Anspruchs 1 angegebenen Merkmale gelöst.

Die Aufgabe wird bezüglich der Anlage in Verbindung mit den Merkmalen des Oberbegriffes erfindungsgemäß durch die im Kennzeichen des Patentanspruchs 4 angegebenen Merkmale gelöst.

Die mit der Erfindung erzielbaren Vorteile bestehen insbesondere darin, daß zwei oder mehr Parallelschwingkreiswechselrichter - die jeweils einem eigenen Induktionsofen zugehörig sind - aus einer gemeinsamen Gleichstromquelle mit lediglich einem Gleichrichter zur Umformung einer Netzwechselspannung in eine Gleichspannung gespeist werden. Die momentan erzeugte Gleichrichterleistung entspricht der Summe aller momentan verbrauchten Parallelschwingkreiswechselrichterleistungen. Dabei ist es beispielsweise möglich, die installierte Gleichrichterleistung nach der installierten Leistung eines Parallelschwingkreiswechselrichters zu bemessen. Das hat den Vorteil hoher Kosteneinsparungen im Vergleich zur konventionellen Technik, bei der jeder Parallelschwingkreiswechselrichter einen eigenen Gleichrichter mit auf den Parallelschwingkreiswechselrichter abgestimmter Leistung benötigt. Gemäß der Erfindung ist es möglich, die momentan verbrauchten Parallelschwingkreiswechselrichterleistungen stufenlos und unabhängig voneinander einzustellen, wobei die Summe aller momentan benötigten Wechselrichterleistungen selbstverständlich nicht die installierte Gleichrichterleistung überschreiten darf. Besonders vorteilhaft ist es, wenn die Summe der momentan verbrauchten Wechselrichterleistungen während aller unterschiedlichen Betriebsphasen stets 100 % der installierten Gleichrichterleistung beträgt, da dann der Gleichrichter optimal genutzt wird und die Netzoberschwingungsbelastung minimal ist.

Die in jeden Induktionsofen eingespeiste Leistung verkleinert sich mit der Vergrößerung der Zeitverzögerung, die zwischen der Zündung der beiden sich diagonal gegenüberliegenden Stromrichterventile liegt. Die eingespeiste Leistung wird maximal wenn die beiden sich diagonal gegenüberliegenden Stromrichterventile gleichzeitig ohne jede Zeitverzögerung gezündet werden. Die eingespeiste Leistung wird minimal bei größtmöglicher Zeitverzögerung, wobei Randbedingungen, wie genügend hohe Spannung am Kondensator des Parallelschwingkreises und Ventil-Schonzeiten zu beachten sind.

Die Erfindung wird nachstehend anhand der in der Zeichnung dargestellten Ausführungsbeispiele erläutert. Es zeigen:
- Figur 1: zwei über jeweils einen eigenen Wechselrichter gespeiste Parallelschwingkreise von zwei Induktionsöfen,
- Figuren 2 bis 6: den zeitlichen Verlauf der im ersten Parallelschwingkreis und in den einzelnen Stromrichterventilen des ersten Wechselrichters fließenden Ströme,
- Figuren 7, 8: den zeitlichen Verlauf der Spannungen an den Kondensatoren der Parallelschwingkreise,
- Figur 9, 10: die prinzipiellen Möglichkeiten der Zündzeitpunkt-Beeinflussung der Stromrichterventile der beiden Wechselrichter zur Leistungsregelung,
- Figuren 11 bis 15: die Verteilung des von der Gleichstromquelle gespeisten Stromes auf Stromflüsse über die Parallelschwingkreise und auf Kurzschlußströme in beiden Wechselrichtern,
- Figur 16: eine Anlage mit vier Parallelschwingkreiswechselrichtern.

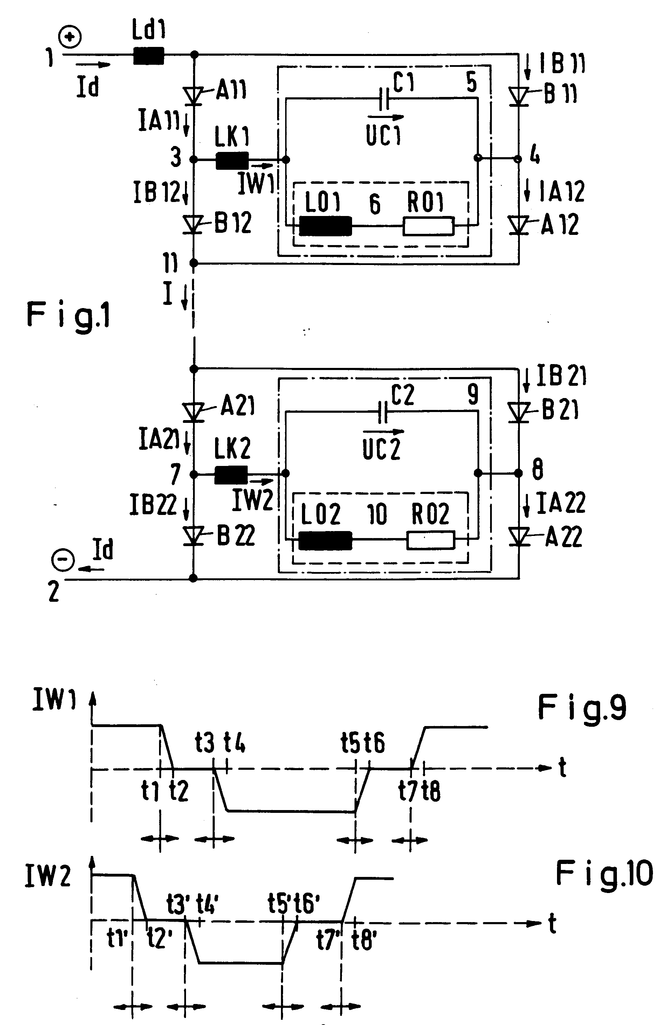

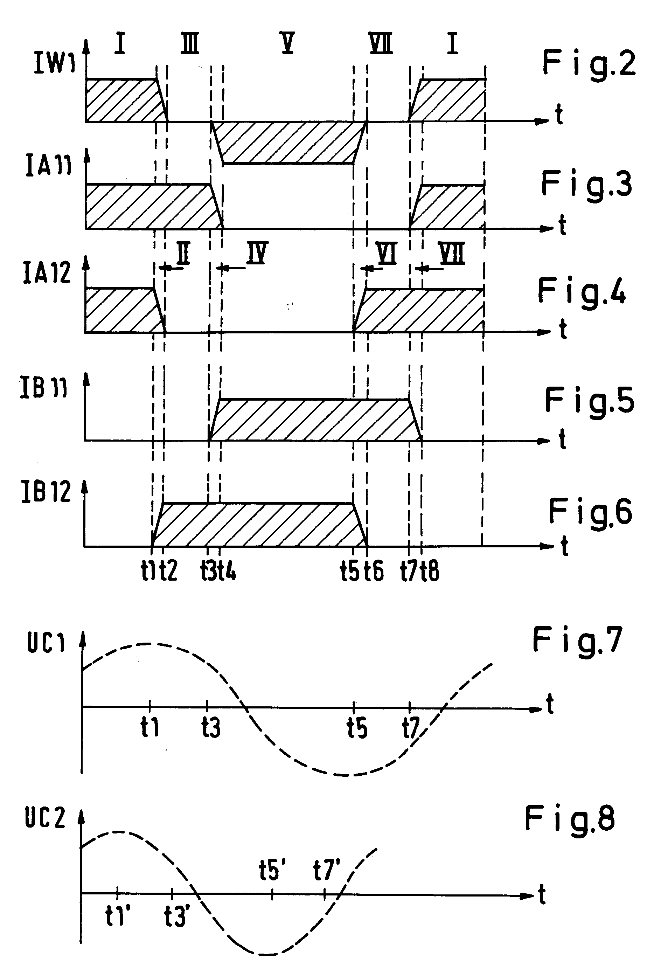

In Figur 1 sind zwei über jeweils einen eigenen Wechselrichter gespeiste Parallelschwingkreise von zwei Induktionsöfen dargestellt. Es ist ein aus vier Stromrichterventilen A11, A12, B11, B12 bestehender erster Wechselrichter zu erkennen, wobei die Anoden der Ventile A11 und B11 über einer Glättungsdrossel Ld1 am positiven Pol 1 und die Kathoden der Ventile B12 und A12 am Verbindungspunkt 11 beider Wechselrichter liegen. Der Verbindungspunkt 11 ist gleichzeitig negativer Pol für den ersten Wechselrichter. Der Verbindungspunkt der Kathode des Ventils A11 und der Anode des Ventils B12 bildet den ersten Lastanschluß 3 sowie der Verbindungspunkt der Kathode des Ventils B11 und der Anode des Ventils A12 den zweiten Lastanschluß 4 des ersten Wechselrichters.

Zwischen beiden Lastanschlüssen 3, 4 ist ein Parallelschwingkreis 5 geschaltet, wobei eine Kommutierungsinduktivität LK1 zwischen Lastanschluß 3 und Parallelschwingkreis 5 angeordnet ist. Der Parallelschwingkreis 5 besteht aus einer Spule 6 eines ersten Induktionsofens und einem parallelgeschalteten Kondensator C1, wobei die Spule 6 eine Induktivität LO1 und einen ohmschen Widerstand RO1 aufweist.

Zwischen dem Verbindungspunkt 11 und dem negativen Pol 2 einer Gleichstromquelle ist ein zweiter Wechselrichter angeordnet. Positiver Pol 1 und negativer Pol 2 werden beispielsweise über einen Gleichrichter aus einem Drehstromnetz gespeist. Der zweite Wechselrichter weist vier Stromrichterventile A21, A22, B21, B22 und zwei Lastanschlüsse 7, 8 auf und speist einen zwischen beiden Lastanschlüssen 7, 8 liegenden zweiten Parallelschwingkreis 9 mit Spule 10 (mit Induktivität LO2 und Widerstand RO2) und Kondensator C2. Zwischen Lastanschluß 7 und Parallelschwingkreis 9 ist eine Kommutierungsinduktivität LK2 geschaltet.

Der Eingangsstrom der beiden Wechselrichter, d.h. der von der Gleichstromquelle gespeiste, über die Glättungsdrossel Ld1 fließende Strom ist mit Id bezeichnet. Die Stromflüsse über die Ventile A11, A12, B11, B12 bzw. A21, A22, B21, B22 lauten IA11, IA12, IB11, IB12 bzw. IA21, IA22, IB21, IB22. Der Ausgangsstrom des ersten Wechselrichters, d.h. der Stromfluß über die Kommutierungsinduktivität LK1 und den Parallelschwingkreis 5 ist mit IW1 bezeichnet. Die Spannung am ersten Kondensator C1 beträgt UC1. Der Ausgangsstrom des zweiten Wechselrichters ist mit IW2 bezeichnet und die Spannung am zweiten Kondensator beträgt UC2.

In den Figuren 2 bis 6 ist der zeitliche Verlauf der im ersten Parallelschwingkreis und in den einzelnen Stromrichterventilen des ersten Wechselrichters fließenden Ströme dargestellt, und zwar im einzelnen in Figur 2 der Strom IW1, in Figur 3 der Strom IA11, in Figur 4 der Strom IA12, in Figur 5 der Strom IB11 und in Figur 6 der Strom IB12. Für die prinzipielle Erläuterung der Stromflüsse lassen sich acht unterschiedliche Schaltphasen unterscheiden, und zwar eine Phase I bis zum Zeitpunkt t1, während der ein positiver Stromfluß IW1 auftritt, eine Kommutierungsphase II zwischen t1 und t2, eine Phase III zwischen t2 und t3, während der kein Strom IW1 fließt, eine Kommutierungsphase IV zwischen t3 und t4, eine Phase V zwischen t4 und t5, während der ein negativer Stromfluß IW1 auftritt, eine Kommutierungsphase VI zwischen t5 und t6, eine Phase VII zwischen t6 und t7, während der kein Strom IW1 fließt und eine Kommutierungsphase VIII zwischen t7 und t8. Die Stromflüsse im weiteren Zeitraum nach t8 entsprechen wiederum der Phase I, so daß Phase I den Zeitraum zwischen t8 und t1 umfaßt.

Wie aus den Strom/Zeit-Verläufen der Figuren 2 bis 6 zu erkennen ist, sind während der Phase I die Ventile A11 und A12 leitend und es ergibt sich ein Stromfluß vom positiven Pol 1 über Ventil A11, den Parallelschwingkreis 5 und Ventil A12 zum negativen Pol 2, d.h. es gilt
Id = IA11 = IW1 = IA12. Zum Zeitpunkt t1 wird Ventil B12 gezündet. Es ergibt sich ein Kommutierungsstrom über den Kondensator C1 und die Ventile B12 und A12 und der Strom über den Parallelschwingkreis 5 und das Ventil A12 kommutiert während dieser Phase II auf Ventil B12, so daß IW1 und IA12 verlöschen, während IB12 ansteigt. Während der Phase III ergibt sich ein Stromfluß vom positiven Pol 1 über Ventil A11 und Ventil B12 zum negativen Pol 11, d.h. es gilt Id = IA11 = IB12.

Zum Zeitpunkt t3 wird Ventil B11 gezündet und es ergibt sich während der Kommutierungsphase IV ein Kommutierungsstrom über den Kondensator C1, das Ventil A11 und das Ventil B11, d.h. der Strom IA11 verlöscht und die Ströme IB11 und IW1 steigen an (IW1 steigt auf den negativen Wert an). Während der anschließenden Phase V gilt
Id = IB11 = IW1 = IB12, d.h. der Strom fließt vom positiven Pol 1 über das Ventil B11, den Parallelschwingkreis 5 und das Ventil B12 zum negativen Pol 11.

Zum Zeitpunkt t5 wird das Ventil A12 gezündet. Es ergibt sich ein Kommutierungsstrom über den Kondensator C1 und die Ventile A12 und B12 und der Strom über den Parallelschwingkreis 5 und das Ventil B12 wird während dieser Kommutierungsphase VI auf Ventil A12 kommutiert, so daß IW1 und IB12 verlöschen, während IA12 ansteigt. Während der nachfolgenden Phase VII ergibt sich ein Stromfluß vom positiven Pol 1 über Ventil B11 und Ventil A12 zum negativen Pol 11, d.h. es gilt Id = IB11 = IA12.

Zum Zeitpunkt t7 wird das Ventil A11 gezündet und es ergibt sich während der Kommutierungsphase VIII ein Kommutierungsstrom über den Kondensator C1, das Ventil B11 und das Ventil A11, d.h. der Strom IB11 verlöscht und die Ströme IA11 und IW1 steigen an (IW1 steigt auf den positiven Wert an). Während der anschließenden Phase I ergibt sich wiederum der Stromfluß vom positiven Pol 1 über das Ventil A11, den Parallelschwingkreis 5 und das Ventil A12 zum negativen Pol 11, wie bereits vorstehend beschrieben.

In Figur 7 ist der zeitliche Verlauf der Spannung am Kondensator C1 des ersten Parallelschwingkreises dargestellt. Die Frequenz dieser Spannung UC1 ist abhängig von der Kapazität des Kondensators C1 sowie dem Widerstand und der Induktivität LO1 der Spule 6. Die Ansteuerung der Ventile des ersten Wechselrichters erfolgt unter Beachtung dieser Frequenz sowie der Spannungs-Nulldurchgänge und positiven bzw. negativen Maxima der Kondensatorspannung UC1. Dabei ist es insbesondere von Wichtigkeit, daß die Spannung UC1 zu den Zeitpunkten t1 (Zündung von B12) und t2 (Zündung von B11) genügend positiv ist, da der Kondensator C1 die erforderliche Kommutierungsspannung bereitstellen muß, um den Kommutierungsstrom über die Ventile B12 und A12 bzw. die Ventile A11 und B11 zu treiben. Desgleichen ist es von Wichtigkeit, daß die Spannung UC1 zu den Zeitpunkten t5 (Zündung von A12) und t7 (Zündung von A11) genügend negativ ist, da der Kondensator C1 die erforderliche Kommutierungsspannung bereitstellen muß, um den Kommutierungsstrom über die Ventile A12 und B12 bzw. die Ventile B11 und A11 zu treiben. Dabei muß die jeweilige Kommutierung vor dem Nulldurchgang der Spannung UC1 beendet sein. Desweiteren ist zu beachten, daß nach erfolgter Kommutierung bis zur Umkehr der Spannung am gerade gesperrten Stromrichterventil die erforderliche Freiwerdezeit eingehalten wird.

Aus der vorstehenden Erläuterung ist ersichtlich, daß dem Parallelschwingkreis 5 und damit der Spule 6 des Induktionsofens nur während der Phasen I, II, IV, V, VI und VIII, nicht jedoch während der Phasen III und VII Leistung aus der Gleichstromquelle zugeführt wird. Durch entsprechende Verbreiterung oder Verkleinerung dieser Phase III und VII kann somit die dem ersten Induktionsofen zugeführte Leistung eingestellt und damit geregelt werden.

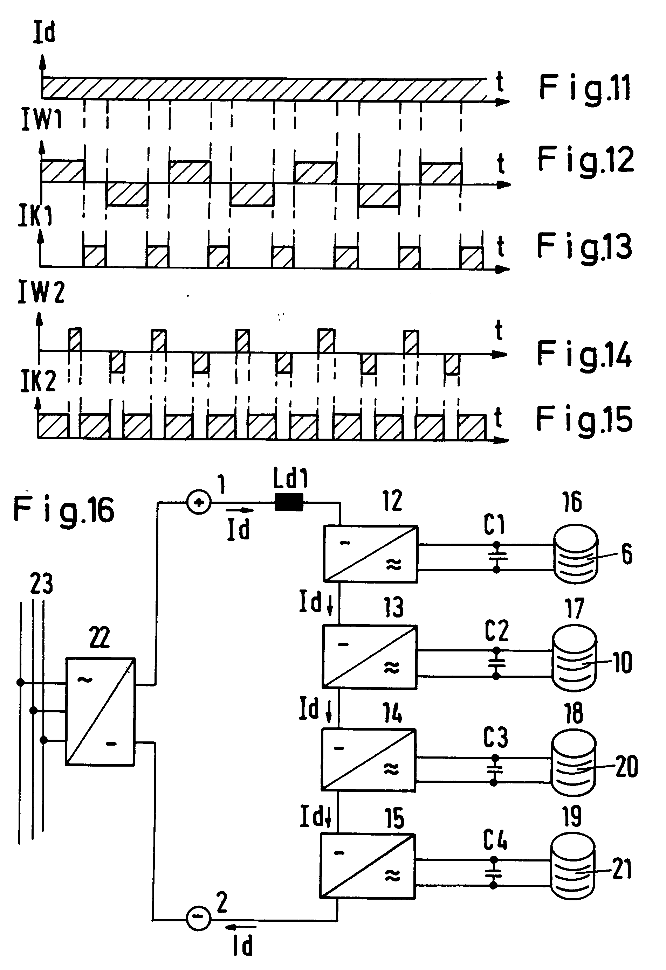

Durch das Zünden der Ventile B12 zum Zeitpunkt t1 bzw. B11 zum Zeitpunkt t3 werden der Beginn bzw. das Ende der Phase III und durch das Zünden der Ventile A12 zum Zeitpunkt t5 bzw. A11 zum Zeitpunkt t7 werden der Beginn bzw. das Ende der Phase VII festgelegt. Wahlweise können entweder nur die Zeitpunkte t1 und t5 oder nur die Zeitpunkte t3 und t7 oder sämtliche Zeitpunkte t1, t3, t5 und t7 zur Leistungsregelung variiert werden, wobei die vorstehend bereits erwähnten Bedingungen für die Spannung UC1 erfüllt sein müssen, d.h. die Spannung UC1 muß zum Zeitpunkt t3 noch genügend positiv und zum Zeitpunkt t7 noch genügend negativ sein, um die erforderlichen Kommutierungsströme zu treiben. In Figur 9 sind diese prinzipiellen Möglichkeiten der Zündzeitpunktbeeinflussung der Stromrichterventile des ersten Wechselrichters zur Leistungsregelung dargestellt.

Ein alternatives Ansteuerverfahren ergibt sich, wenn zum Zeitpunkt t1 das Ventil B11 und zum Zeitpunkt t3 das Ventil B12 gezündet werden. Ferner können alternativ zum Zeitpunkt t5 das Ventil A11 und zum Zeitpunkt t7 das Ventil A12 gezündet werden. Bei diesen alternativen Verfahren ergeben sich zwar jeweils andere Stromverläufe IA11, IA12, IB11, IB12 als unter den Figuren 3 bis 6 beschrieben, der Stromverlauf von IW1 jedoch bleibt unverändert.

Die vorstehenden Erläuterungen für den zeitlichen Verlauf der im ersten Parallelschwingkreis 5 und in den einzelnen Stromrichterventilen des ersten Wechselrichters fließenden Ströme gelten sinngemäß in gleicher Art und Weise für den zeitlichen Verlauf der im zweiten Parallelschwingkreis 9 und den einzelnen Stromrichterventilen des zweiten Wechselrichters fließenden Ströme. Der zeitliche Verlauf der Spannung am Kondensator C2 des zweiten Parallelschwingkreises 9 ist dabei in Figur 8 angedeutet. Es ist zu erkennen, daß die Frequenz der Spannung UC2 unabhängig von der Frequenz der Spannung UC1 ist. Dies ist verständlich, da die Frequenz der Spannung UC2 von der Kapazität des Kondensators C2 sowie vom Widerstand RO2 und der Induktivität LO2 der Spule 10 des zweiten Induktionsofens abhängt (u. a. beeinflußt die Ofenfüllung die Frequenz). Die Ansteuerung der Ventile des zweiten Wechselrichters erfolgt unter Beachtung dieser Frequenz.

Dabei ergeben sich in gleicher Art und Weise, wie vorstehend unter Figuren 2 bis 6 beschrieben, Zeitpunkte t1′, t2′, t3′, t4′, t5′, t6′, t7′ und t8′ sowie Schaltphasen I′, II′, III′, IV′, V′, VI′, VII′ und VIII′. Durch entsprechende Verbreiterung oder Verkleinerung der Phasen III′ und VII′, während der kein Strom IW2 über den zweiten Parallelschwingkreis 9 fließt, läßt sich somit die dem zweiten Induktionsofen über die Spule 10 zugeführte Leistung einstellen und regeln.

Durch das Zünden der Ventile B22 zum Zeitpunkt t1′ und B21 zum Zeitpunkt t3′ werden der Beginn bzw. das Ende der Phase III′ und durch das Zünden der Ventile A22 zum Zeitpunkt t5′ bzw. A21 zum Zeitpunkt t7′ werden der Beginn bzw. das Ende der Phase VII′ festgelegt. Wahlweise können entweder nur die Zeitpunkte t1′ und t5′ oder nur die Zeitpunkte t3′ und t7′ oder sämtliche Zeitpunkte t1′, t3′, t5′ und t7′ zur Leistungsregelung variiert werden, wobei die Bedingungen für die Spannung UC2 erfüllt sein müssen, d.h. die Spannung UC2 muß zum Zeitpunkt t3′ noch genügend positiv und zum Zeitpunkt t7′ noch genügend negativ sein, um die erforderlichen Kommutierungsströme zu treiben.

In Figur 10 sind diese prinzipiellen Möglichkeiten der Zündzeitpunktbeeinflussung der Stromrichterventile des zweiten Wechselrichters zur Leistungsregelung dargestellt.

Ein alternatives Ansteuerverfahren ergibt sich, wenn zum Zeitpunkt t1′ das Ventil B21 und zum Zeitpunkt t3′ das Ventil B22 gezündet werden. Ferner können alternativ zum Zeitpunkt t5′ das Ventil A21 und zum Zeitpunkt t7′ das Ventil A22 gezündet werden. Bei diesen alternativen Verfahren ergeben sich zwar jeweils andere Stromverläufe IA21, IA22, IB21, IB22, der Stromverlauf von IW2 jedoch bleibt unverändert.

Prinzipiell können die dem ersten bzw. zweiten Induktionsofen zugeführten Leistungen unabhängig voneinander und stufenlos eingestellt werden, der erste Induktionsofen kann beispielsweise mit 80% seiner Nennleistung und der zweite Induktionsofen mit 50% seiner Nennleistung betrieben werden. Es ist jedoch besonders vorteilhaft, wenn sich die Leistungssumme bei Induktionsöfen gleicher Nennleistung in allen Betriebsfällen zu 100% ergibt, d.h. der erste Induktionsofen wird beispielsweise mit 10% seiner Nennleistung und der zweite Induktionsofen gleichzeitig mit 90% seiner Nennleistung betrieben. Bei einer derartigen alternativen Betriebsweise von zwei Induktionsöfen muß die Gleichstromquelle (z.B. Gleichrichter mit Gleichstromzwischenkreis) nur für 100% der Leistung eines Parallelschwingkreiswechselrichters ausgelegt werden, kann aber zwei Induktionsöfen mit beispielsweise je 90% Leistung abwechselnd speisen, wobei jeweils ein Ofen z.B. im Schmelzbetrieb und der andere Ofen gleichzeitig im Warmhaltebetrieb mit 10% Leistung arbeitet. Es ist selbstverständlich möglich, beide Induktionsöfen auch gleichzeitig im Warmhaltebetrieb mit je 10% Leistung arbeiten zu lassen, wobei hierzu die von der Gleichstromquelle abzugebende Leistung beispielsweise durch entsprechende Beeinflussung der Ventile des Gleichrichters herabgesetzt werden kann.

Die vorstehenden Erläuterungen beziehen sich stets auf eine Anordnung mit zwei Parallelschwingkreiswechselrichtern. Wie jedoch in Figur 1 bereits angedeutet ist, können weitere Parallelschwingkreiswechselrichter vorhanden sein, d.h. es sind Anlagen mit wahlweise zwei, drei, vier usw. Parallelschwingkreiswechselrichtern einsetzbar, wobei die Parallelschwingkreiswechselrichter gleichstromseitig in Serie geschaltet sind. Zweckmäßig erfolgt die Ansteuerung der einzelnen Parallelschwingkreiswechselrichter in gegenseitig abgestimmter Weise derart, daß die Gleichstromquelle stets 100% Leistung abgibt, wobei diese Leistung in gewünschter Art und Weise auf die einzelnen Parallelschwingkreiswechselrichter aufgeteilt wird. Bei einer derartigen Betriebsweise ist sichergestellt, daß die Gleichstromquelle ein vorgeschaltetes Drehstromsystem mit minimalem Blindleistungsbedarf und minimalem Oberwellenspektrum belastet.

In Figur 16 ist beispielsweise eine Anlage mit vier Parallelschwingkreiswechselrichtern 12, 13, 14, 15 dargestellt, die gleichstromsseitig in Reihe zwischen positivem Pol 1 und negativem Pol 2 der Gleichstromquelle liegen, wobei ein an ein Drehstromnetz 23 angeschlossener Gleichrichter 22 und die Glättungsdrossel Ld1 als Gleichstromquelle dienen. Die Spulen 6, 10, 20, 21 und die Kondensatoren C1, C2, C3, C4 der Parallelschwingkreise sind Induktionsöfen 16, 17, 18, 19 zugeordnet. Bei einer Nennleistung 100% je Parallelschwingkreiswechselrichter 12 bis 15 wird die Gleichstromquelle vorzugsweise auf 200% dieser Leistung ausgelegt, wobei zwei Induktionsöfen gleichzeitig mit je 90% Nennleistung (Schmelzbetrieb) und zwei Induktionsöfen mit je 10% Nennleistung (Warmhaltebetrieb) optimal betrieben werden können.

In den Figuren 11, 12, 13, 14, 15 ist die Aufteilung des konstanten Eingangsstromes Id der Wechselrichter in einen Stromfluß IW1 über den Parallelschwingkreis 5 und einen Kurzschlußstrom IK1 sowie der Summe Id = IW1 + IK1 in einen Stromfluß IW2 über den Parallelschwingkreis 9 und einen Kurzschlußstrom IK2 schematisch dargestellt, wobei die Kommutierungsphasen jeweils vernachlässigt sind. Die Eigenfrequenzen beider Schwingkreise sind unterschiedlich. Während der Stromfluß IW1 über die sich diagonal gegenüberliegenden Ventile A11, A12 oder B11, B12 sowie der Stromfluß IW2 über die sich diagonal gegenüberliegenden Ventile A21, A22 oder B21, B22 verläuft, fließen der Kurzschlußstrom IK1 über zwei direkt in Serie liegende Ventile A11, B12 oder B11, A12 sowie der Kurzschlußstrom IK2 über zwei direkt in Serie liegenden Ventile A21, B22 oder B21, A22. Beim Beispiel gemäß den Figuren 11 bis 15 sind die durch den ersten Wechselrichter fließenden Kurzschlußstromblöcke etwa halb so breit wie die Stromblöcke über den Parallelschwingkreis 5.

Bei beiden Wechselrichtern ist ein sehr weiter Leistungssteuerbereich (1:100 und mehr) möglich, was einem Zeitversatz bei der Ventilzündung bis ca. 50°el. entspricht.

## Patentansprüche

1. Verfahren zur Ansteuerung der Stromrichterventile von zwei oder mehr aus einer gemeinsamer Gleichstromquelle gespeisten, gleichstromseitig in Reihe geschalteten, lastgeführten Parallelschwingkreiswechselrichtern mit jeweils einem Induktionsofen, wobei durch Zünden von jeweils zwei sich diagonal gegenüberliegenden Stromrichterventilen (A11, A12 oder B11, B12 oder A21, A22 oder B21, B22) eines Wechselrichters ein Stromfluß (Id) aus der Gleichstromquelle über den an diesen Wechselrichter angeschlossenen Parallelschwingkreis (5,9) eingestellt wird, dadurch gekennzeichnet, daß jeweils zwei sich diagonal gegenüberliegende Stromrichterventile (A11,A12 oder B11,B12 oder A21,A22 oder B21,B22) eines Wechselrichters zeitverzögert gezündet werden, so daß sich zeitweise ein "Kurzschlußstrom" über zwei direkt in Serie liegende Stromrichterventile (A11,B12 oder B11,A12 oder A21,B22 oder B21,A22) dieses Wechselrichters ergibt.

2. Verfahren nach Anspruch 1, dadurch gekennzeichnet, daß die von jedem Parallelschwingkreis aufgenommene Leistung durch Variation der Zeitverzögerung bei der Zündung von zwei sich diagonal gegenüberliegenden Stromrichterventilen (A11,A12 oder B11,B12 oder A21,A22 oder B21,B22) unabhängig voneinander und stufenlos eingestellt wird.

3. Verfahren nach Anspruch 1 und/oder 2, dadurch gekennzeichnet, daß der Zeitversatz bei der Ventilzündung im Bereich 0°....50° el. liegt.

4. Anlage aus zwei oder mehreren Induktionsöfen, deren Spulen jeweils einem eigenen Parallelschwingkreiswechselrichter zugeordnet sind, zur Durchführung des Verfahrens nach Anspruch 1, dadurch gekennzeichnet, daß die zwei oder mehr Parallelschwingkreiswechselrichter (12,13,14,15) gleichstromseitig in Reihe geschaltet und an eine einzige Gleichstromquelle (22,23,Ld1) angeschlossen sind.

5. Anlage nach Anspruch 4, dadurch gekennzeichnet, daß die installierte Nennleistung der Gleichstromquelle (22,23,Ld1) der installierten Nennleistung eines Parallelschwingkreiswechselrichters entspricht.

## Claims

1. Method of driving the converter valves of two or more load-commutated parallel resonant circuit inverters with one induction furnace in each case which are fed from a common direct-current source and are connected in series on the direct-current side, a current flow (Id) from the direct-current source via the parallel resonant circuit (5, 9) connected to said inverter being set by triggering two diagonally opposite converter valves (A11, A12 or B11, B12 or A21, A22 or B21, B22) of an inverter in each case, characterized in that, in each case, two diagonally opposite converter valves (A11, A12 or B11, B12 or A21, A22 or B21, B22) of an inverter are triggered with a time delay so that a "short-circuit current" intermittently occurs via two converter valves (A11, B12 or B11, A12 or A21, B22 or B21, A22), situated directly in series, of said inverter.

2. Method according to Claim 1, characterized in that the power drawn by each parallel resonant circuit is set independently of each other and infinitely by varying the time delay in the triggering of two diagonally opposite converter valves (A11, A12, or B11, B12 or A21, A22 or B21, B22).

3. Method according to Claim 1 and/or 2, characterized in that the time offset in the valve triggering is in the range 0° .... 50° el.

4. Arrangement comprising two or more induction furnaces whose coils are each associated with a separate parallel resonant circuit inverter, for carrying out the method according to Claim 1, characterized in that the two or more parallel resonant circuit inverters (12, 13, 14, 15) are connected in series on the direct-current side and are connected to a single direct-current source (22, 23, Ld1).

5. Arrangement according to Claim 4, characterized in that the installed rated power of the direct-current source (22, 23, Ld1) corresponds to the installed rated power of a parallel resonant circuit inverter.

## Revendications

1. Procédé de commande des valves de deux ou plus de deux onduleurs commandés par la charge, alimentés à partir d'une source commune de courant continu, montés en série côté courant continu et alimentant chacun un circuit oscillant parallèle comprenant un four à induction, l'amorçage de chaque fois deux valves (A11, A12 ou B11, B12 ou A21, A22 ou B21, B22) diagonalement opposées d'un onduleur établissant un flux de courant (Id) à partir de la source de courant continu par le circuit oscillant parallèle (5,9) raccordé à cet onduleur, caractérisé par le fait que chaque fois deux valves (A11, A12 ou B11, B12 ou A21, A22 ou B21, B22) diagonalement opposées d'un onduleur sont amorcées avec décalage, de sorte qu'il s'établit temporairement un "courant de court-circuit" par deux valves (A11, B12 ou B11, A12 ou A21, B22 ou B21, A22) montées directement en série de cet onduleur.

2. Procédé suivant la revendication 1, caractérisé par le fait que la puissance absorbée par chaque circuit oscillant parallèle est réglée indépendamment pour chaque circuit oscillant parallèle et de façon continue par variation du décalage de l'amorçage de deux valves (A11, A12 ou B11, B12 ou A21, A22 ou B21, B22) diagonalement opposées.

3. Procédé suivant la revendication 1 et/ou 2, caractérisé par le fait que le décalage lors de l'amorçage des valves est compris entre 0° et 50°el.

4. Installation formée de deux ou plus de deux fours à induction dont les bobines sont associées chacune à un onduleur séparé d'alimentation de circuit oscillant parallèle, pour la mise en oeuvre du procédé suivant la revendication 1, caractérisée par le fait que les onduleurs (12,13,14,15) des circuits oscillants parallèles, au nombre de deux ou plus, sont montés en série côté courant continu et sont raccordés à une source de courant continu (22,23,Ld1) unique.

5. Installation suivant la revendication 4, caractérisée par le fait que la puissance nominale installée de la source de courant continu (22,23,Ld1) correspond à la puissance nominale installée d'un onduleur de circuit oscillant parallèle.
